# EUROPEAN PATENT APPLICATION

(11) **EP 4 321 574 A1**
(43) Date of publication of application: **14.02.2024**
(21) Application number: 23770983.7
(22) Date of filing: 20.02.2023
(51) Int. Cl.: C08K 5/20, C08K 5/1539, C08K 5/3415, C08L 79/08, C08G 73/10, C08J 5/18, C09D 179/08

(54) **POLYMER RESIN COMPOSITION, METHOD FOR MANUFACTURING POLYMER RESIN FILM, POLYMER RESIN FILM AND SUBSTRATE FOR DISPLAY DEVICE USING SAME, AND OPTICAL DEVICE**

(30) Priority: 15.03.2022 KR 20220032290
(71) Applicant: LG Chem, Ltd., Seoul 07336 (KR)
(72) Inventor: HAN, Seung Jin, Daejeon 34122 (KR); PARK, Chan Hyo, Daejeon 34122 (KR)
(74) Representative: Goddar, Heinz J.
(86) International application number: PCT/KR2023/002407
(87) International publication number: WO 2023/177103

(57) **Abstract**

The present invention relates to a polymer resin composition capable of realizing properties such as excellent heat resistance while having improved coating properties in an inorganic film, a method for preparing a polymer resin film, a substrate for a display device using the polymer resin film, and an optical device.

## Description

### [FIELD OF THE INVENTION]

### Cross-reference to related application(s)

This application claims the benefit of priority to Korean Patent Application No. 10-2022-0032290, filed March 15, 2022, the entire disclosure of which is hereby incorporated by reference herein.

The present invention relates to a polymer resin composition capable of improving coating properties in an inorganic film while simultaneously realizing properties such as excellent heat resistance, a method for producing a polymer resin film, a polymer resin film, a substrate for a display device using the polymer resin film, and an optical device.

### [BACKGROUND]

The display market is rapidly shifting toward flat panel displays (FPDs), which can offer a large surface area, thinness, and lightweight. These flat panel displays include liquid crystal displays (LCD), organic light emitting displays (OLED), or electrophoretic displays (EPD).

Rigid type displays are manufactured using a glass substrate. Flexible type displays are manufactured using a plastic substrate as the base material.

However, as plastic substrates are applied to flexible displays, problems such as restoration arterimage occurs. Also, plastic substrates have poor heat resistance, thermal conductivity, and electrical insulation compared to glass substrates.

Nevertheless, active research has been performed to replace glass substrates with plastic substrates, which have the advantages of being lightweight, flexible, and can be manufactured in a continuous process, for applications in mobile phones, notebook PCs, and televisions.

Polyimide resins are easy to synthesize, can be manufactured into thin films, and can be applied to high-temperature processes. In line with the trend toward lighter weight and more precise electronic devices, polyimide resins are increasingly being used as materials in semiconductor materials. In particular, intensive research is being conducted to apply polyimide resins to flexible plastic display boards, which require lightweight and flexible properties.

In addition, substrate materials such as polyimide resins are supplied in the form of solutions, which are compositions containing polyimide resins, but solvents such as methylpyrrolidone, which are used as the main solvent, are hazardous compounds, and there is a continuous need to develop compositions utilizing solvents that can replace them.

### [BRIEF SUMMARY]

The present invention relates to a polymer resin composition capable of improving coating properties in an inorganic film while simultaneously realizing properties such as excellent heat resistance.

Also, the present invention is to provide a method for manufacturing a polymer resin film using the above polymer resin composition, a polymer resin film, a substrate for a display device using the polymer resin film, and an optical device.

There is provided a polymeric resin composition comprising a polyimide-based resin, a compound represented by Formula 1 below, and a compound represented by Formula 2 below.

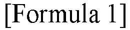

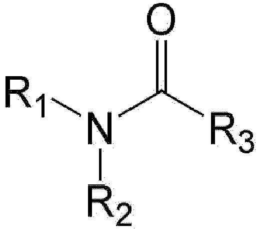

In Formula 1 above, R₁ and R₃ are each independently an alkyl group having 1 to 10 hydrogen or carbon atoms,

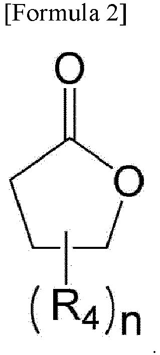

In Formula 2 above, R₄ is an alkyl group having 1 to 10 carbon atoms, and n is an integer from 0 to 3.

Also provided herein is a method of preparing a polymeric resin film, comprising applying the polymeric resin composition to a substrate to form a coating; drying the coating; and curing the dried coating by heat treatment.

Also provided herein is a polymer resin film having a Td 1% is at least 560 °C and a transmittance of at least 65% for a wavelength of 380 nm to 780 nm.

Also provided herein is a substrate for a display device, comprising the polymeric resin film.

Also provided herein is an optical device, comprising the polymer resin film.

A polymer resin composition, a method of manufacturing a polymer resin film, a polymer resin film, a substrate for a display device using the polymer resin film, and an optical device of the present invention will be described in more detail below.

### [DETAILED DESCRIPTION OF THE INVENTION]

Unless otherwise expressly stated herein, technical terms are intended to refer only to specific embodiments and are not intended to limit the invention.

As used herein, singular forms include plural forms unless the context clearly indicates the contrary.

As used herein, the meaning of "including" or "comprising" specifies certain characteristics, regions, integers, steps, actions, elements, and/or components and does not exclude the existence or added value of other specific characteristics, regions, integers, steps, actions, elements, components, and/or groups.

Further, terms including ordinal numbers, such as "first" and "second," are used for the purpose of distinguishing one component from another and are not limited by said ordinal numbers. For example, within the scope of the present invention, a first component may also be named a second component, and similarly, a second component may be named a first component.

As used herein, the term (co)polymer may include both polymers and copolymers, wherein a polymer means a homopolymer comprising a single repeating unit and a copolymer means a complex polymer comprising two or more repeating units.

As used herein, examples of substituents are described below, but are not limited thereto.

As used herein, the term "substitution" means the bonding of another functional group in place of a hydrogen atom in a compound, and the substituted position is not limited as long as the substituent is substitutable, and in the case of two or more substitutions, the two or more substituents may be identical or different from each other.

As used herein, the term "substituted or unsubstituted" includes deuterium; halogen; cyano; nitro; hydroxyl; carbonyl; ester; imide; amide; primary amino; carboxy; sulfonic acid; sulfonamide; phosphine oxide; alkoxy; aryloxy; alkylthio; arylthio; alkylsulfoxide; arylsulfoxide; silyl; boron; alkyl; cycloalkyl; alkenyl; aryl; aralkyl; aralkenyl; alkylaryl; alkoxysilylalkyl; aryl phosphine; or substituted or unsubstituted with 1 or more substituents selected from the group consisting of a heterocycle containing 1 or more of N, O, and S atoms, or substituted or unsubstituted with 2 or more of the above substituents which are linked. For example, a "substituent having 2 or more substituents connected" may be a biphenyl group, i.e., a biphenyl group may be an aryl group, or may be construed as a substituent having 2 phenyl groups connected.

As used herein, , 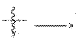 , or means a bond that connects to another substituent, and a direct bond means that no separate atom is present at the portion denoted by L .

In the present invention, aromatic is a characteristic that satisfies the Huckels Rule, wherein an aromatic can be defined as satisfying all of the following three conditions according to the Huckels Rule.
1) There must be 4n+2 electrons that are fully conjugated by empty p-orbitals, unsaturated bonds, lone pairs, etc.
2) The 4n+2 electrons must form a planar isomer, which is a ring structure.
3) All atoms in the ring must be able to participate in the conjugation.

As used herein, a multivalent functional group is a residue in which a plurality of hydrogen atoms is removed from any compound, for example, a divalent functional group, a trivalent functional group, or a tetravalent functional group. In one example, a tetravalent functional group derived from cyclobutane refers to a residue with four hydrogen atoms removed that is bonded to cyclobutane.

As used herein, an aryl group is a monovalent functional group derived from arene, preferably but not exclusively having 6 to 20 carbon atoms, and may be a monocyclic aryl group or a polycyclic aryl group. The monocyclic aryl group may be, but is not limited to, a phenyl, biphenyl, or terphenyl group. Polycyclic aryl groups may include, but are not limited to, naphthyl, anthracenyl, phenanthryl, pyrenyl, perylenyl, chrysenyl, fluorenyl, and the like. The aryl groups may be substituted or unsubstituted, and if substituted, examples of substituents are as described above.

For the purposes of this specification, a direct or single bond means that no atoms or groups of atoms are present at that location and are connected by a bond. Specifically, it means that no separate atoms are present in the portion of the formula represented by L₁ and L₂.

As used herein, the weight average molecular weight refers to the weight average molecular weight of the polystyrene equivalent determined by the GPC method. In the process of determining the weight average molecular weight of polystyrene equivalent as determined by the GPC method, analytical devices and detectors such as differential refractive index detectors and analytical columns known in the art can be used, and conventional temperature conditions, solvents, and flow rates can be applied. As a specific example of the above measurement conditions, using a Waters PL-GPC220 instrument with a Polymer Laboratories PLgel MIX-B 300 mm long column, the evaluation temperature is 160 °C, 1,2,4-trichlorobenzene is used as the solvent, the flow rate is 1 mL/min, the sample is prepared at a concentration of 10 mg/10 mL and supplied in a volume of 200 µL, and the value of Mw is obtained using a black curve formed using a polystyrene standard. Nine polystyrene standards with molecular weights of 2,000 / 10,000 / 30,000 / 70,000 / 200,000 / 700,000 / 2,000,000 / 4,000,000 / 10,000,000 were used.

Hereinafter, the present invention will be described in more detail.

According to one embodiment of the invention, a polymeric resin composition may be provided, comprising a polyimide-based resin, a compound represented by Formula 1, and a compound represented by Formula 2.

The conventionally widely used N-methylpyrrolidone (NMP) is designated as a hazardous chemical substance in the National Chemical Information System (NCIS). When DEAc, GVL, DEF, etc. are applied to replace it, there is a problem of fluttering in the curing process. The present inventors have confirmed that, as one embodiment, by including a compound represented by the above Formula 1 and a compound represented by the above Formula 2 as the polymer resin composition, wherein, an excellent polymer resin composition preventing such fluttering phenomenon can be provided.

Furthermore, as described below, the polymer resin composition according to the present invention does not have a fluttering phenomenon on the inorganic film deposition substrate, and the substrate for display devices using the polymer resin composition according to the present invention does not affect optical properties such as yellow index and light transmittance even after undergoing a high temperature process of 430 °C or higher. Further, it was confirmed that the shape of individual layers or the shape of the laminated structure does not change significantly, and the change in physical properties is also not significant.

In particular, according to one embodiment, since the polymer resin composition includes a compound represented by Formula 1 and a compound represented by Formula 2, even in a process in which a high temperature of 400 °C or more is applied, particularly in a manufacturing process of a substrate for a display device, there is no significant deterioration of optical properties or deformation of the form, and furthermore, due to the high surface resistance, it is possible to prevent the occurrence of afterimages and panel part malfunctions in the display panel, thereby providing a high-quality optical device.

Specifically, in one embodiment, the polymeric resin composition can include a polyimide-based resin, a compound represented by Formula 1 below, and a compound represented by Formula 2 below.

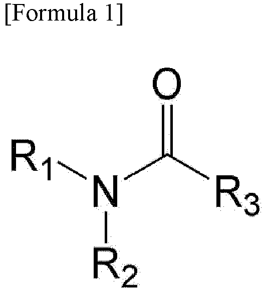

In formula 1 above, R₁ and R₃ are each independently an alkyl group having 1 to 10 hydrogen or carbon atoms,

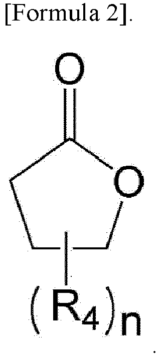

In Formula 2 above, R₄ is an alkyl group having 1 to 10 carbon atoms, and n is an integer from 0 to 3.

The compound represented by Formula 1 and the compound represented by Formula 2 may have a boiling point of 150 °C or more, i.e., the compound represented by Formula 1 and the compound represented by Formula 2 exist in a liquid state at room temperature above 20 °C and below 30 °C, and may be included in the polymer resin composition in the form of a solvent.

In the compounds represented by Formula 1 above, R₁ and R₃ may each independently be an alkyl group having 1 to 10 carbon atoms, for example, in Formula 1 above, R₁ and R₂ may be alkyl groups having 2 to 10 carbon atoms, and R₃ may be an alkyl group having 1 to 10 carbon atoms.

More specifically, the compounds represented by Formula 1 above may include the compound represented by Formula 1-1 below.

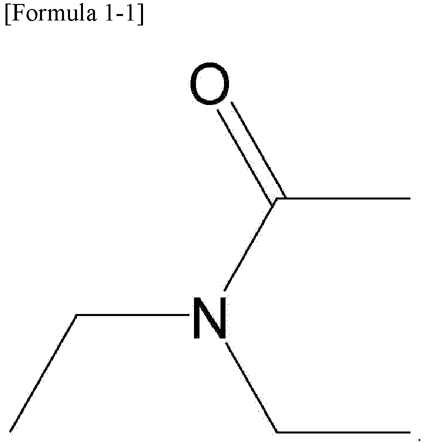

In the compound represented by Formula 2 above, R₄ is an alkyl group having 1 to 10 carbon atoms, and n may be an integer from 1 to 3.

More specifically, the compound represented by Formula 2 above may include the compound represented by Formula 2-1 below.

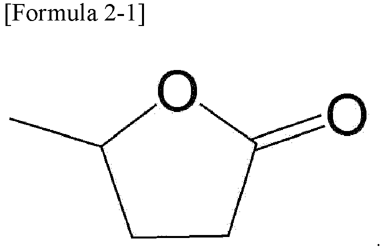

Since the compound represented by Formula 1 above and the compound represented by Formula 2 above are listed as conventional chemicals in the National Chemical Information System (NCIS), a polymer resin composition of the above embodiment including them may be provided to replace methylpyrrolidone (NMP), which is designated as an N-hazardous chemical.

The polymeric resin composition may comprise less than 0.0001 wt%, and less than 0.00001 wt%, of the compound represented by Formula 3 below, based on the total polymeric resin composition.

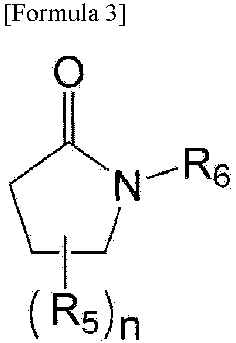

In Formula 3 above, R₅ is an alkyl group having 1 to 10 carbon atoms, n is an integer from 0 to 3, and R₆ is hydrogen or an alkyl group having 1 to 10 carbon atoms.

Containing less than 0.0001 wt% of a compound represented by Formula 3 with respect to the total polymeric resin composition may mean that the polymeric resin composition of the embodiment is substantially free of a compound represented by Formula 3.

The solvent of the polymeric resin composition of the above embodiments may be realized as the polymeric resin composition comprises less than 0.0001 wt% of the compound represented by Formula 3 with respect to the total polymeric resin composition.

If the total polymer resin composition contains more than 0.0001 wt% of the compound represented by the above formula 3, it may be designated as a hazardous chemical and may cause reproductive toxicity. Consequently, polymer resin compositions containing the compounds represented by the above Formula 3 have traditionally been characterized by poor environmental stability, resulting in poor environmental safety for workers in the process. As such, the development of alternative solvents has been required.

In one embodiment, the polymeric resin composition of the above embodiment may simultaneously comprise a compound represented by Formula 1 and a compound represented by Formula 2.

In the case of including only compounds represented by Formula 1 above, technical problems such as coating properties on inorganic films may occur due to properties such as boiling point of compounds represented by Formula 1, and in the case of including only compounds represented by Formula 2 above, technical problems may occur in the formation of polymers due to poor polymerization.

Specifically, the polymeric resin composition of the above embodiments may comprise, 99 parts by weight or less, 50 parts by weight or greater but 99 parts by weight or less, 50 parts by weight or greater but 80 parts by weight or less, 50 parts by weight or greater but 75 parts by weight or less, 60 parts by weight or greater but 75 parts by weight or less, or 60 parts by weight or greater but 70 parts by weight or less of the compound represented by Formula 2 based on 100 parts by weight of the compound represented by Formula 1.

If the polymeric resin composition of the above embodiments comprises more than 99 parts by weight of the compound represented by Formula 2 relative to 100 parts by weight of the compound represented by Formula 1, the polymer formation may be reduced due to reduced polymerization.

The polymeric resin composition of the above embodiments may comprise a nitrogen-containing multi-cyclic compound having 5 or greater carbon atoms. The nitrogen-containing multi-cyclic compound having 5 or greater carbon atoms may be included in the polymeric resin composition to act as a catalyst to promote imidation of the polyimide-based resin, such that polymer alignment and water removal of the polyimide-based resin in the polymeric resin composition prior to volatilization of the solvent can effectively occur, thereby minimizing film lifting of the polymeric resin film in the prepared optical device.

The types of nitrogen-containing polycyclic compounds having 5 or greater carbon atoms are not substantially limited, but may include, for example, nitrogen-containing heterocyclic compounds having 5 or greater carbon atoms. As used herein, a heterocyclic compound means a cyclic compound comprising at least one of the heteroatoms O, N, Si, and S. Such nitrogen-containing heterocyclic compounds having 5 or greater carbon atoms may include, for example, 1,4-diazabicyclo[2.2.2]octane (DABCO) or Lepidine (4-methylquinoline).

More specifically, said nitrogen-containing polycyclic compounds having 5 or greater carbon atoms can include nitrogen-containing heterocyclic aromatic compounds having 5 or greater carbon atoms. As used herein, a heterocyclic aromatic compound means a cyclic aromatic compound comprising at least one of the heteroatoms O, N, Si, and S. Examples of heterocyclic aromatic compounds include thiophenes, furans, pyrroles, imidazoles, thiazoles, oxazoles, oxadiazoles, triazoles, pyridyl groups, bipyridines, pyrimidines, triazines, acridine pyridazines, pyrazines, quinolines, quinazolines, quinoxalines, phthalazines, pyridopyrimidines, pyridopyrazines, pyrazino pyrazine, isoquinoline, indole, carbazole, benzooxazole, benzoimidazole, benzothiazole, benzocarbazole, benzothiophene, dibenzothiophene, benzofuranyl group, phenanthroline, isoxazole, thiadiazole, phenothiazine, and dibenzofuran, but are not limited to. The heterocyclic aromatic compounds may be substituted or unsubstituted.

Said nitrogen-containing heterocyclic aromatic compounds having 5 or greater carbon atoms may include, for example, 4-methylquinoline (Lepidine).

The nitrogen-containing polycyclic compound having 5 or greater carbon atoms may be included in an amount of not less than 0.1 wt% and not more than 10 wt% based on the total weight of the polymeric resin composition.

If the nitrogen-containing polycyclic compound having 5 or greater carbon atoms is included in less than 1 wt% by weight of the total polymeric resin composition, said nitrogen-containing polycyclic compound may not be sufficiently included and may cause technical problems such as clogging during the curing process. If the nitrogen-containing polycyclic compounds are included in an amount greater than 10 wt% by weight of the total polymer resin composition, technical problems such as a decrease in the heat resistance and optical properties of the polymer may occur.

Furthermore, said polymeric resin composition may comprise at least 0.1 parts by weight and no more than 20 parts by weight, at least 1 part by weight and no more than 20 parts by weight, at least 3 parts by weight and no more than 20 parts by weight, at least 5 parts by weight and no more than 20 parts by weight, of a nitrogen-containing multi-ring compound having 5 or greater carbon atoms, based on 100 parts by weight of the polyimide-based resin solids.

If the nitrogen-containing polycyclic compounds having 5 or greater carbon atoms are included at less than 0.1 parts by weight per 100 parts by weight of the polyimide-based resin solids, there may be film lifting in the inorganic film due to insufficient inclusion of the nitrogen-containing polycyclic compounds. If they are included at more than 20 parts by weight, there may be a decrease in overall polymer properties.

In one aspect, the polyimide-based resin includes both polyimide and its precursor polymers polyamic acid and polyamic acid ester. That is, the polyimide-based polymer may include at least one type selected from the group consisting of polyamic acid repeating units, polyamic acid ester repeating units, and polyimide repeating units. That is, the polyimide-based polymer may comprise a copolymer of one polyamic acid repeating unit, one polyamic acid ester repeating unit, one polyimide repeating unit, or a mixture of two or more of these repeating units.

The one or more repeating units selected from the group consisting of said polyamic acid repeating units, polyamic acid ester repeating units, and polyimide repeating units may form the main chain of said polyimide-based polymer.

The polyimide-based resin film may comprise a cure of the polyimide-based resin. The cure of the polyimide-based resin means a product obtained by a curing process of the polyimide-based resin.

Specifically, said polyimide-based resin film may comprise a polyimide resin comprising aromatic imide repeating units.

In a tetracarboxylic acid or anhydride thereof and a diamine compound utilized as a monomer in the synthesis of a polyimide-based resin, said aromatic imide repeating unit may be implemented such that the tetracarboxylic acid or anhydride thereof includes an aromatic group, the diamine compound includes an aromatic group, or both the tetracarboxylic acid or anhydride thereof and the diamine compound include an aromatic group.

More specifically, said polyimide-based resin film may comprise a polyimide resin comprising aromatic imide repeating units.

In a tetracarboxylic acid or anhydride thereof and a diamine compound utilized as a monomer in the synthesis of a polyimide-based resin, said aromatic imide repeating unit may be implemented such that the tetracarboxylic acid or anhydride thereof includes an aromatic group, the diamine compound includes an aromatic group, or both the tetracarboxylic acid or anhydride thereof and the diamine compound include an aromatic group.

In particular, said polyimide-based resins may comprise polyimide repeating units represented by the following Formula 1.

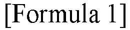

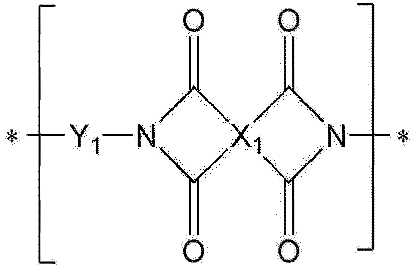

In Formula 1 above, X₁ is an aromatic tetravalent functional group and Y₁ is an aromatic divalent functional group having 6 to 10 carbon atoms.

In Formula 1, X₁ is an aromatic tetravalent functional group and X₁ is a functional group derived from a tetracarboxylic acid anhydride compound used in the synthesis of polyimide-based resins.

More specifically, said X₁ tetrafunctional groups may include the tetrafunctional groups represented by the following Formula 5.

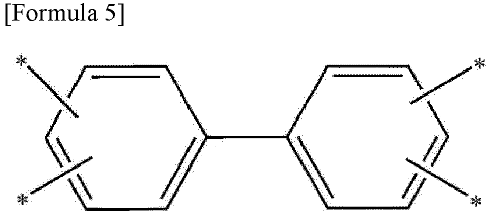

A specific example of a functional group represented by Formula 2 above is the functional group represented by Formula 5-1 below, which is derived from biphenyltetracarboxylic anhydride (3,3,4,4 -Biphenyltetracarboxylic dianhydride, BPDA).

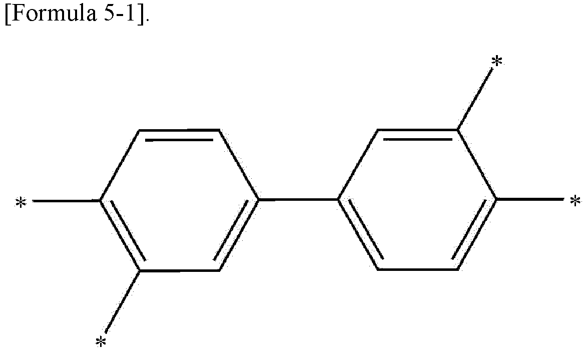

In Formula 1, Y₁ is an aromatic divalent functional group having 6 to 10 carbon atoms, and Y₁ may be a functional group derived from polyamic acid, polyamic acid ester, or a diamine compound used in the synthesis of polyimide.

The aromatic divalent functional groups having 6 to 10 carbon atoms may include phenylene groups. More specifically, the aromatic divalent functional group having 6 to 10 carbon atoms of Y₁ may include a functional group represented by the following Formula 3.

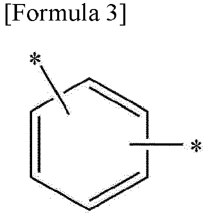

Specific examples of functional groups represented by Formula 3 below include the functional group represented by Formula 3-1 below, which is derived from m-phenylenediamine (1,3-phenylenediamine, m-PDA), and the functional group represented by Formula 3-2 below, which is derived from p-phenylenediamine (1,4-phenylenediamine, p-PDA).

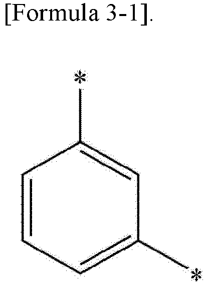

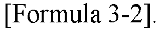

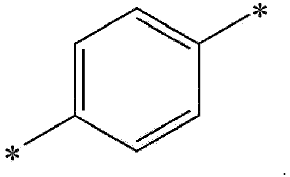

By including the functional groups represented by Formula 3-1 in Y₁, the arrangement in the thickness direction can be maintained as the asymmetric structure is introduced into the polyimide chain structure, thereby reducing the difference in refractive indexes in the surface direction and the thickness direction while realizing a low phase difference.

Furthermore, when the functional group represented by Formula 3-2 is included in the above Y₁, a molecularly arranged region in a linear form is formed, which can increase the rigidity of the polyimide-based resin and realize excellent heat stability.

Specifically, said polyimide-based resin contains, for each mole of functional group represented by Formula 3-1, at least 0.1 mole and 0.9 mole or less, at least 0.2 mole and 0.9 mole or less, at least 0.3 mole and 0.9 mole or less, at least 0.5 mole and 0.9 mole or less, at least 0.6 mole and 0.9 mole or less, at least 0.1 mol and 0.8 mol or less, at least 0.2 mol and 0.8 mol or less, at least 0.3 mol and 0.8 mol or less, at least 0.5 mol and 0.8 mol or less, at least 0.6 mol and 0.8 mol or less, at least 0.1 mol and 0.7 mol or less, at least 0.2 mol and 0.7 mol or less, at least 0.3 mol and 0.7 mol or less, at least 0.5 mol and 0.7 mol or less, at least 0.6 mol and 0.7 mol or less.

When less than 0.1 mole, less than 0.2 mole, less than 0.3 mole, less than 0.5 mole, or less than 0.6 mole of a functional group represented by Formula 3-1 above is included for each mole of a functional group represented by Formula 3-2 above, a decrease in stiffness, a decrease in chemical resistance, and a decrease in thermal stability may occur due to the arrangement of the polymer and the interpolymeric bulky structure.

In addition, for every mole of functional group represented by Formula 3-1 above, if more than 0.9 moles, more than 0.8 moles, or more than 0.7 moles of the functional group represented by the above Formula 3-1 derived from m-phenylenediamine (1,3-phenylenediamine, m-PDA) is included, it is difficult to realize the bent asymmetric structure of the functional group represented by the above Formula 3-1. In such case, the refractive index in the thickness direction decreases as the polymer grows only in the planar direction as the polyimide is polymerized only in the plane straight line direction, and the refractive index difference between the planar direction and the thickness direction increases as the polymer is densely packed.

The polyimide-based resin may comprise a combination of an aromatic tetracarboxylic acid anhydride and an aromatic diamine having 6 to 10 carbon atoms.

The aromatic tetracarboxylic acid disodium anhydride is a compound in which an anhydride group (-OC-O-CO-) is introduced at both ends of the aromatic tetravalent functional group as described above.

A specific example of such an aromatic tetracarboxylic acid dihydrate is 4, biphenyltetracarboxylic acid dihydrate (3,3,4,4 -Biphenyltetracarboxylic dianhydride, BPDA).

The aromatic diamine having 6 to 10 carbon atoms is a compound in which an amino group (-NH₂) is introduced at the both ends of the aromatic divalent functional group having 6 to 10 carbon atoms as described above, and the aromatic divalent functional group having 6 to 10 carbon atoms is as described above.

Specific examples of aromatic diamines having 6 to 10 carbon atoms include m-phenylenediamine (1,3-phenylenediamine, m-PDA) and p-phenylenediamine (1,4-phenylenediamine, p-PDA).

More specifically, the polyimide-based resin may be formed by the reaction of a terminal anhydride group (-OC-O-CO-) of the aromatic tetracarboxylic acid dihydrate and a terminal amino group (-NH₂) of an aromatic diamine having 6 to 10 carbon atoms, wherein a bond is formed between a nitrogen atom of the amino group and a carbon atom of the anhydride group.

The weight average molecular weight (as measured by GPC) of the polyimide-based resin is not intended to be limited, but may be, for example, 1000 g/mol or greater bur 200000 g/mol or less, or 10000 g/mol or greater but 200000 g/mol or less.

The polyimide-based resin according to the present invention can exhibit excellent colorless and transparent properties while maintaining properties such as heat resistance and mechanical strength due to its rigid structure, and can be used in various fields such as substrates for devices, cover substrates for displays, optical films, integrated circuit (IC) packages, adhesive films, multilayer flexible printed circuits (FRCs), tapes, touch panels, protective films for optical disks, and the like, and is particularly suitable for cover substrates for displays.

According to another embodiment of the invention, there is provided a method of manufacturing a polymeric resin film, comprising the steps of applying the polymeric resin composition to a substrate to form a coating (Step 1); drying the coating (Step 2); and curing said dried coating by heat treatment (Step 3).

In Step 1, the resin composition containing the polyimide-based resin described above is applied to a substrate to form a coating. The method of applying the resin composition containing the polyimide-based resin to the substrate is not particularly limited, and for example, screen printing, offset printing, flexographic printing, inkjet, and the like may be utilized.

Further, the resin composition comprising the polyimide resin may be dissolved or dispersed in an organic solvent. In this form, for example, if the polyimide resin is synthesized in an organic solvent, the solution may be the reaction solution itself or a dilution of the reaction solution with another solvent. Alternatively, if the polyimide resin is obtained as a powder form, it may be dissolved in an organic solvent to form a solution.

The organic solvent may include a compound represented by Formula 1 and a compound represented by Formula 2, as described above.

The compound represented by the above Formula 1 and the compound represented by the above formula 2 are designated as conventional chemicals by National Chemical Information System (NCIS). However, unlike conventional polymer resin compositions, these compounds do not include as solvents such as N-methylpyrrolidone (NMP), which is designated as a hazardous chemical due to reproductive toxicity, and thus can realize relatively good environmental stability.

Further, the organic solvent may include less than 0.0001 wt%, less than 0.00001 wt%, of the compound represented by Formula 3 below, based on the total amount of the organic solvent.

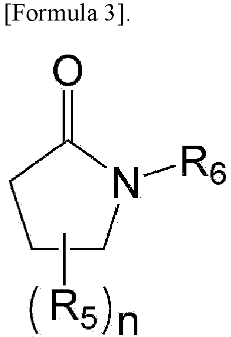

In Formula 3 above, R₅ is an alkyl group having 1 to 10 carbon atoms, n is an integer from 0 to 3, and R₆ is hydrogen or an alkyl group having 1 to 10 carbon atoms.

Containing less than 0.0001 wt% of a compound represented by Formula 3 based on the total amount of the organic solvent may mean that the organic solvent substantially does not contain a compound represented by Formula 3.

As said organic solvent comprises less than 0.0001 wt% of the compound represented by Formula 3 based on the total amount of the organic solvent, the method of preparing the polymer resin film of the above embodiment can realize excellent environmental stability.

If the organic solvent contains 0.0001 wt% of the compound represented by Formula 3 above based on the total amount of the organic solvent, the environmental stability may be significantly jeopardized. Specifically, the compounds represented by Formula 3 are hazardous chemicals that are reproductively toxic according to the NCIS. Consequently, solvents containing the compounds represented by the above Formula 3 have poor environmental stability, and there has been a need to develop solvents that can replace them.

Specifically, said organic solvent may comprise, 99 parts by weight or less, 50 parts by weight or greater but 99 parts by weight or less, 50 parts by weight or greater but 90 parts by weight or less, 50 parts by weight or greater but 80 parts by weight or less, 50 parts by weight or greater but 75 parts by weight or less, 60 parts by weight or greater but 70 parts by weight, or 60 parts by weight or greater but 75 parts by weight or less of the compound represented by Formula 2 based on 100 parts by weight of the compound represented by Formula 1.

If the organic solvent contains more than 99 parts by weight of the compound represented by Formula 1 above based on 100 parts by weight of the compound represented by Formula 2 above, a decrease in polymer properties due to a decrease in polymerization degree may occur.

The resin composition containing the above polyimide-based resin may include solids in an amount that allows it to have an appropriate viscosity in consideration of processability, such as applicability during the film-forming process. For example, the content of the composition may be adjusted so that the total resin content is at least 5 wt% but not more than 25 wt%, or at least 5 wt% not not more than 20 wt%, or at least 5 wt% but not more than 15 wt%.

In addition, the resin composition comprising the polyimide-based resin may further comprise other components in addition to the organic solvent. As a non-limiting example, the resin compositions containing the polyimide-based resins may further include compounds that, when applied, can improve film thickness uniformity or surface smoothness, improve adhesion to a substrate, change dielectric or conductivity, or increase density. Examples of such compounds include surfactants, silane-based compounds, dielectric or crosslinking compounds, and the like.

More specifically, it can include a nitrogen-containing polycyclic compound having 5 or more carbon atoms, as described above. The above description of nitrogen-containing polycyclic compounds having 5 or more carbon atoms is inclusive of all of the foregoing.

In Step 2, the resin composition comprising the polyimide-based resin is applied to the substrate and the coating formed is dried.

The drying step of the coating may be carried out by heating means such as a hot plate, a hot air circulation furnace, an infrared furnace, and the like, and may be carried out at a temperature of 50 °C or more but and 150 °C or less, or 50 °C or more but 100 °C or less.

In Step 3, the dried coating is cured by heat treatment. In this case, the heat treatment may be performed by heating means such as a hot plate, a hot air circulation furnace, an infrared furnace, and the like, and may be performed at a temperature of 200 °C or more, or at a temperature of 200 °C or more but 300 °C or less.

The thickness of the polyimide-based resin film is not substantially limited, but is freely adjustable, for example, within a range of 0.01 µm or more and 1000 µm or less. When the thickness of the polyimide-based resin film increases or decreases by a certain value, the physical properties measured in the polyimide-based resin film may also change accordingly.

According to another embodiment of the invention, there may be provided a polymeric resin film having a Td of 1% and a transmittance of at least 65% for wavelengths from 380 nm to 780 nm.

The polymer resin film is prepared from the polymer resin composition described above, and may be prepared according to the method for preparing the polymer resin film described above.

The polymer resin film prepared from the above-described polymer resin composition may have a Td of 1% and a transmittance of 65% or more for wavelengths from 380 nm to 780 nm.

The polymeric resin film of the above embodiments may have a Td 1% to be 560°C or more, 564°C or more, 650°C or less, 600°C or less, or 560°C or more but 650°C or less, 560°C or more but 600°C or less, 564°C or more but 600°C or less, 570°C or more but 600°C or less, 575°C or more but 600°C or less.

"Td 1%" may mean the temperature (°C) at which the weight loss is 1% based on the mass of the sample at 100°C. The method of measuring Td 1% is not substantially limited, but may be measured, for example, using a TGA instrument. More specifically, it may be measured using a Discovery TGA instrument from TA Instruments, Inc.

As the Td 1% of the polymer resin film of the above embodiment is greater than 560 °C, it exhibits excellent heat resistance, so that mechanical properties and dimensional stability can be secured without deformation even at high temperatures. Specifically, in the manufacture of flexible displays, deformation and denaturation of the resin layer can be significantly reduced even if the process is subjected to a high temperature of 430 °C or higher.

Further, the polymeric resin film of the above embodiments may have a transmittance for wavelengths from 380 nm to 780 nm of at least 65%, at least 67%, at least 90%, at least 65% but 90% or less, or at least 67% but 90% or less.

The method of measuring said transmittance is not substantially limited, but may be measured, for example, using UV-vis spectroscopy. More specifically, the transmittance may be measured for light with a wavelength of 470 nm using a UV-vis spectroscopy device.

Since the polymer resin film of the above embodiment has a transmittance of 65% or more for wavelengths of 380 nm to 780 nm, excellent optical properties may be realized.

A substrate for a display device comprising a polymeric resin film of another embodiment may be provided. The polymeric resin film may include all of those described above in the above embodiment.

A display device including the substrate may include, but is not limited to, a liquid crystal display device (LCD), an organic light emitting diode (OLED), a flexible display, or a rollable or foldable display.

The display device may have a variety of structures depending on the application and specific form, and may include, for example, a cover plastic window, a touch panel, a polarizer, a barrier film, a light-emitting element (such as an OLED element), a transparent substrate, and the like.

The polyimide-based resin films of other embodiments described above can be used in these various display devices for a variety of applications, including as substrates, outer protective films, or cover windows, and more specifically as substrates.

For example, the substrate for the display device may have a structure in which an element protection layer, a transparent electrode layer, a silicon oxide layer, a polyimide-based resin film, a silicon oxide layer, and a hard coating layer are sequentially laminated.

The transparent polyimide substrate may comprise a silicon oxide layer formed between the transparent polyimide-based resin film and the curing layer, which may further improve solvent resistance, water permeability, and optical properties, wherein the silicon oxide layer is produced by curing a polysilazane.

Specifically, the silicon oxide layer may be formed by coating and drying a solution comprising polysilazane prior to the step of forming a coating layer on at least one surface of said transparent polyimide-based resin film, and then curing said coated polysilazane.

By including the element protection layer described above, the substrate for a display device according to the present invention can provide a transparent polyimide cover substrate having excellent bending properties and impact resistance, while having solvent resistance, optical properties, moisture permeability, and scratch resistance.

According to another embodiment of the invention, there may be provided an optical device comprising the polymeric resin film. The polymeric resin film may include all of those described.

The optical device may include any device that utilizes the property of being realized by light, for example, a display device. Specific examples of such display devices include, but are not limited to, liquid crystal display devices (LCDs), organic light emitting diodes (OLEDs), flexible displays, or rollable or foldable displays.

The optical device may have a variety of structures depending on the application and specific form, and may include, for example, a cover plastic window, a touch panel, a polarizer, a barrier film, a light-emitting element (such as an OLED element), a transparent substrate, and the like.

The polymeric resin films of other embodiments described above can be used in these various optical devices for a variety of applications, such as substrates, outer protective films, or cover windows, and more specifically as substrates.

### [Advantageous Effects]

According to the present invention, a polymer resin composition, a method of preparing a polymer resin film, a substrate for a display device using the polymer resin film, and an optical device may be provided, which can realize properties such as excellent heat resistance while having improved coating properties in an inorganic film.

The invention is described in more detail in the following embodiments. However, the following embodiments are only for illustrative purposes, and the content of the invention is not limited by the following embodiments.

### <Examples and Comparative Examples: Preparation of polyimide compositions and polyimide films>.

### Example 1

### (1) Preparation of polyimide compositions

After filling 91.8 g of N,N-diethylacetamide (DEAc, N,N-diethylacetamide) and 61.2 g of γ-Valerolactone (GVL, γ-Valerolactone) in a stirrer with nitrogen airflow, p-phenylenediamine (1,4-phenylenediamine, p-PDA) was added at 25 °C to dissolve while the temperature of the reactor was maintained at 25 °C. To the above solution, 3,3',4,4'-biphenyltetracarboxylic dianhydride (3,3',4,4'-Biphenyltetracarboxylic dianhydride, BPDA) was added at the same temperature and stirred for 24 hours. At this time, 27 g of polyimide solids were obtained out of a total of 180 g of the prepared polyimide precursor composition.

1.35 g, 5 wt% based on the total solids content of Lepidine (4-methylquinoline) was then added and stirred to prepare a polyimide precursor composition.

### (2) Preparation of polyimide films

The polyimide precursor composition was spin coated on the glass substrate. The glass substrate to which the polyimide precursor composition was applied was subjected to a curing process by maintaining it at 80 °C for 5 to 30 minutes and at 260 °C for 60 minutes, and a polyimide film having a thickness of 10 µm (with an error of ±1 µm) was prepared on the glass substrate.

### Example 2

The polyimide precursor composition and polyimide film were prepared by the same method as in Example 1 above, except that 2.7 g, 10 wt% based on the total solids content of Lepidine (4-methylquinoline) was added.

### Comparative Examples 1-3, Reference Examples 1-4

Polyimide precursor compositions and polyimide films were prepared in the same manner as in Example 1 above, except that the weight ratio of solvent mixutres, the molar ratio of monomers, and the additive content were varied as shown in Table 2 and Table 3 below.

### <Experimental Example: Measurement of Properties of Polyimide Precursor Compositions and Polyimide Films Obtained in Examples and Comparative Examples

The properties of the polyimide precursor compositions and polyimide films obtained in the above embodiments and comparative examples were measured by the following methods, and the results are shown in Tables 1 to 3.

### 1. Heat Resistance (Td 1%, °C)

The temperature (°C) of a polyimide resin layer specimen with a weight loss of 1% was measured under a nitrogen atmosphere using a Discovery TGA instrument from TA instruments.

Specifically, it was isothermally held at 50°C for 5 minutes, temperature was elevated to 200°C, and isothermally held for 30 minutes. Then, it was cooled to 50°C to stabilize and warmed up to 600°C at a rate of 10°C/min. The temperature at 1% weight loss was calculated based on the mass at 100°C after stabilization.

### 2. Transmittance

Transmittance (T) to light at a wavelength of 470 nm was measured using a UV-vis spectroscopy (Agillent, UV 8453) device.

### 3. Evaluate the membrane flutter

After the heat treatment process at 430°C for 2 hours with an elevated temperature rate of 3°C/min, the membrane was visually evaluated for the occurrence of film lifting phenomenon according to the following criteria.
∘: Film Lifting Observed
X: No Film Lifting Observed

**[Table 1]**

| Results of Examples 1-2 | | |
|---|---|---|
| | Example 1 | Example 2 |
| Solvent weight percentage (%) | 60:40 (DEAc/GVL) | 60/40 |
| | | (DEAc/GVL) |
| Diamine molar ratio (%) | 100 (p-PDA) | 100 |
| | | (p-PDA) |
| Anhydrous Molar Ratio (%) | 100 (BPDA) | 100 |
| | | (BPDA) |
| Lepidine (wt%) | 5 | 10 |
| DABCO (weight %) | 0 | 0 |
| Solids Content (%) | 15 | 15 |
| Td 1% (°C) | 575 | 575 |
| T (Transmittance) (%) | 67 | 67 |
| @470 nm | | |
| Fluttering Evaluation | O | X |

**[Table 2]**

| Results for Experimental Example of Comparative Examples 1-3 | | | |
|---|---|---|---|
| | Comparative Example 1 | Comparative Example 2 | Comparative Example 3 |
| Solvent weight percentage (%) | 100/0 | 0/100 | 100 |
| | (DEAc/GVL) | (DEAc/GVL) | NMP (methylpyrrolidone) |
| Diamine molar ratio (%) | 100p-PDA | 100 | 100 |
| | | p-PDA | p-PDA |
| Anhydrous Molar Ratio (%) | 100BPDA | 100 | 100 |
| | | BPDA | BPDA |
| Lepidine (wt%) | 0 | 0 | 0 |
| DABCO (weight %) | 0 | 0 | 0 |
| Solid Content (%) | 15 | 15 | 15 |
| Td 1% (°C) | 575 | - | 576 |
| T (Transmittance) (%) @470 nm | 65 | -. | 64 |
| Fluttering Evaluation | O | O | X |

**[Table 3]**

| Results for Experimental Example of Reference Examples 1-4 | | | | |
|---|---|---|---|---|
| | Reference Example 1 | Reference Example 2 | Reference Example 3 | Reference Example 4 |
| Solvent weight percentage | 50/50 (DEAc/GVL) | 60/40 (DEAc/GVL) | 60/40 (DEAc/GVL) | 60/40 (DEAc/GVL) |
| Diamine mole ratio | 100p-PDA | 100 | 100 | 100 |
| | | p-PDA | p-PDA | p-PDA |
| Anhydrous Molar Ratio | 100BPDA | 100 BPDA | 100 BPDA | 100 BPDA |
| Lepidine (wt%) | 5 | 0 | 15 | 0.1 |
| DABCO (weight %) | 0 | 0 | 0 | 0 |
| Solids Content (%) | 15 | 15 | 15 | 15 |
| Td 1% (°C) | 570 | 575 | 572 | 575 |
| T (Transmittance) (%) @470 nm | 63 | 64 | 64 | 64 |
| Fluttering Evaluation | O | O | X | O |

As shown in Tables 1 to 3 above, the polymer resin films exhibits optical properties such as excellent heat resistance and light transmittance compared to the polymer resin film of the comparative examples and the reference examples, and it can be confirmed that no clogging phenomenon occurred.

## Claims

1. A polymeric resin composition comprising a polyimide-based resin, a compound represented by Formula 1 below, and a compound represented by Formula 2 below: 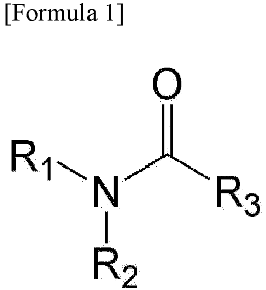
wherein, in the Formula 1,
R₁ to R₃ are each independently a hydrogen atom or an alkyl group having 1 to 10 carbon atoms, 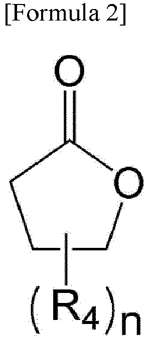
wherein, in the Formula 2,
R₄ is an alkyl group having 1 to 10 carbon atoms,
n is an integer of 0 to 3.

2. The polymeric resin composition according to claim 1, wherein an amount of the compound represented by Formula 2 is 99 parts by weight or less based on 100 parts by weight of the compound represented by Formula 1.

3. The polymeric resin composition according to claim 1, wherein the polymeric resin composition comprises less than 0.0001 wt% of the compound represented by Formula 3 based on the total polymeric resin composition: 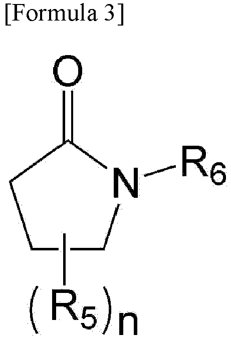
wherein, in the Formula 3,
R₅ is an alkyl group having 1 to 10 carbon atoms,
n is an integer of 0 to 3, and
R₆ is hydrogen or an alkyl group having 1 to 10 carbon atoms.

4. The polymeric resin composition according to claim 1, wherein the polymeric resin composition further comprises a nitrogen-containing polycyclic compound having 5 or more carbon atoms.

5. The polymeric resin composition according to claim 4, wherein the nitrogen-containing polycyclic compound having 5 or more carbon atoms comprises a nitrogen-containing heterocyclic compound having 5 or more carbon atoms.

6. The polymeric resin composition according to claim 4, wherein the polymeric resin composition comprises the nitrogen-containing polycyclic compound having 5 or more carbon atoms in an amount of from 1 wt% to 10 wt% based on the total weight of the polymeric resin composition.

7. The polymeric resin composition according to claim 4, wherein the polymeric resin composition comprises 0.1 to 20 parts by weight of the nitrogen-containing polycyclic compound having 5 or more carbon atoms based on 100 parts by weight of the polyimide-based resin solids.

8. The polymeric resin composition according to claim 1, wherein the polyimide resin comprises an aromatic imide repeating unit.

9. The polymeric resin composition according to claim 1, wherein the polyimide resin comprises a polyimide repeating unit represented by Formula 4 below: 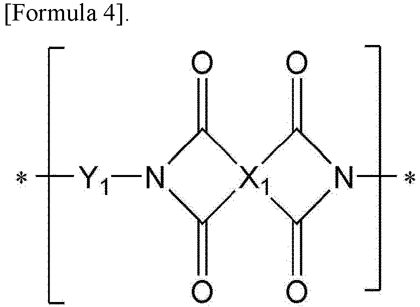
wherein, in the Formula 4,
X₁ is an aromatic tetravalent functional group containing an ether group,
Y₁ is an aromatic divalent functional group having 6 to 10 carbon atoms.

10. The polymeric resin composition according to claim 9, wherein X₁ comprises a tetravalent functional group represented by the following Formula 5:

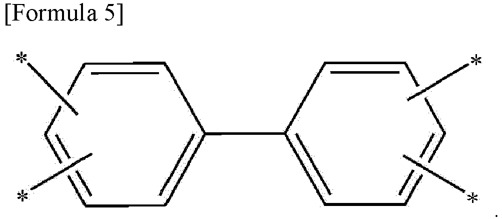

11. A method of preparing a polymeric resin film, comprising
applying the polymeric resin composition of claim 1 to a substrate to form a coating;
drying the coating; and
curing the dried coating by heat treatment.

12. A polymer resin film having Td 1% of 560 °C or more, and a transmittance of at least 65% for wavelengths from 380 nm to 780 nm.

13. A substrate for a display device, comprising the polymeric resin film of claim 12.

14. An optical device, comprising the polymeric resin film of claim 12.
